# NEUE EUROPÄISCHE PATENTSCHRIFT

(11) **EP 1 458 232 B2**
(45) Veröffentlichungstag und Bekanntmachung des Hinweises auf die Entscheidung über den Einspruch: **21.01.2009**
(45) Hinweis auf die Patenterteilung: 20.04.2005
(21) Anmeldenummer: 02798266.9
(22) Anmeldetag: 06.12.2002
(51) Int. Cl.: A01K 39/012

(54) **VORRICHTUNG FÜR DIE FÜTTERUNG VON GEFLÜGEL, INSBESONDERE MASTGEFLÜGEL, VORZUGSWEISE BROILER**
DEVICE FOR FEEDING POULTRY ESPECIALLY FATTENED POULTRY, PREFERABLY BROILERS
DISPOSITIF POUR ALIMENTER DES VOLAILLES, EN PARTICULIER DES VOLAILLES ENGRAISSEES, DE PREFERENCE DES POULETS A GRILLER

(30) Priorität: 24.12.2001 DE 10164122
(43) Veröffentlichungstag der Anmeldung: 22.09.2004
(73) Patentinhaber: Big Dutchman International GmbH, 49377 Vechta (DE)
(72) Erfinder: BUSSE, Roland, 49661 Cloppenburg (DE)
(74) Vertreter: Jabbusch, Matthias
(86) Internationale Anmeldenummer: PCT/DE2002/004475
(87) Internationale Veröffentlichungsnummer: WO 2003/055299

(56) Entgegenhaltungen:
- EP-A- 0 421 553
- EP-A- 1 145 631
- EP-B- 0 105 571

## Beschreibung

Die Erfindung bezieht sich auf eine Vorrichtung für die Fütterung von in einem Stall freilaufend gehaltenem Geflügel, insbesondere Mastgeflügel, vorzugsweise Broiler, mit mindestens einem über dem Boden des Stalls heb- und senkbar gehaltenen Futterförderrohr, das eine Reihe von Abzweigöffnungen hat, von denen jede einer am Förderrohr hängenden Schaleneinrichtung zugeordnet ist, die ein von der Abzweigöffnung abgehendes Fallrohr und eine unter dem Fallrohr befindliche Futterschale mit aus speichenartig verlaufenden Gitterstäben gebildeter Schalenkuppel aufweist, wobei das Fallrohr aus einem von der Abzweigöffnung abgehenden Innenzylinder sowie einem den Innenzylinder umschließenden Außenzylinder besteht, an dem die Futterschale mittels der Gitterstäbe ihrer Schalenkuppel derart hängt, daß sie bei abgesenktem Futterförderrohr aufsetzt, insbesondere auf dem Boden des Stalls aufsetzt, wobei der Außenzylinder an dem Innenzylinder drehbar sowie heb- und senkbar geführt ist und wenigstens ein den Heb- und Senkweg begrenzender Hubanschlag vorgesehen ist.

Eine Vorrichtung der vorbeschriebenen Gattung ist in der EP 0 105 571 B1 beschrieben.

Bei der bekannten Vorrichtung wird das Aufsetzen der Futterschale bei abgesenktem Fütterungsrohr dazu genutzt, weitere Öffnungen im Fallrohr freizugeben. Demzufolge können, entsprechend der jeweiligen Lage der Öffnungen in Bezug zur Futterschale, dem über das Fallrohr in die Futterschale gelangenden Futter unterschiedliche Schüttkegel bzw. Schütthöhen zugeordnet werden. Um z. B. Küken verbesserte Freßverhältnisse zu bieten, ist eine höhere Schütthöhe und damit ein höheres Futterniveau in der Schale notwendig, was durch Freigeben weiterer Öffnungen im Fallrohr bei der bekannten Vorrichtung erreicht wird. Entsprechend dem Wachstum der Küken kann das Futterniveau in der Schale aber auch wieder niedriger eingestellt werden, weil letztendlich wachsende und damit größer werdende Tiere auch tiefer gelegene Bereiche in der Futterschale zwecks Futteraufnahme problemloser als Küken erreichen können.

In einem Stall installierte Vorrichtungen sollen möglichst wartungsarm sein. Es ist deshalb ein möglichst gleichmäßiger und dabei noch störungsfreier Nachschub des Futters in jeweils vorbestimmter Dosierung in jede einzelne Futterschale anzustreben. Bei der bekannten Vorrichtung können sich jedoch Störungen dadurch einstellen, daß Futteraustritte vom Fallrohr in die Futterschale ungleichmäßig erfolgen, z. B. dadurch, daß sich entsprechende Austrittsöffnungen in der Mantelfläche des Fallrohres zusetzen können. Dies ist insbesondere bei zur Brückenbildung neigendem Futter, beispielsweise bei Futter mit schlechterem Rieselverhalten, der Fall.

Außerdem kann sich das Außenrohr gegenüber dem Innenrohr verdrehen, wodurch der Querschnitt einer zusätzlichen Austrittsöffnung im Fallrohr verringert wird, weil eine Öffnung im Außenzylinder bei Verdrehung nicht mehr oder nur partiell mit der zugeordneten Öffnung im Innenzylinder kongruiert.

Futterschalen sollten in regelmäßigen Abständen gereinigt werden. Dies erfolgt durch Abspritzen mit Wasser, zumeist nach einer Mastperiode, bevor der Stall mit neuen Küken belegt wird. Während des Abspritzens ist es vorteilhaft, daß sich die Futterschale um die Längsachse des vom Fütterungsrohr abgehenden Fallrohres drehen kann, weil dabei praktisch alle Innenbereiche der Futterschale an einem von einer Seite aus in die Futterschale gerichteten scharfen Wasserstrahl vorbeilaufen. Ist die Drehmöglichkeit der Futterschale auf dem Innenzylinder des Fallrohres für die Reinigung noch vorteilhaft, so ist sie aus vorbeschriebenen Gründen für die Freihaltung der zusätzlichen Öffnungen im Fallrohr dennoch nachteilig. Ein weiterer Nachteil der freien Drehbarkeit der Futterschale ist darin zu sehen, daß sich ein voreingestellter Abstand zwischen der Futterschale und dem freien Ende des Fallrohres, von dem das jeweils gewünschte Futterniveau in der Futterschale abhängig ist, durch die Drehbewegung während des Reinigens unbeabsichtigt verstellt werden kann.

Eine Vorrichtung der eingangsgenannten Art ist durch eine Vorbenutzung "GRO-PRO" der VAL-PRODUCT INC. bekannt.

Der Erfindung liegt die Aufgabe zugrunde, diese Nachteile bei einer Vorrichtung zum Füttern von Geflügel, wie sie hier eingangs beschrieben ist, zu vermeiden.

Gelöst wird diese Aufgabe durch die Merkmale des Patentanspruchs 1. Vorteilhafte Weiterbildungen und Ausgestaltungen ergeben sich aus den Merkmalen der Ansprüche 2 bis 13.

Bei der erfindungsgemäßen Vorrichtung bestehen sowohl der Außenzylinder als auch der Innenzylinder jeweils aus einander benachbarten, zueinander koaxialen Zylinderabschnitten, wobei einander zugekehrte Stirnrandbereiche der Zylinderabschnitte miteinander verbunden sind über Brückenorgane, die einen Spaltbereich überbrücken, der dem Abstand zwischen den Zylinderabschnitten entspricht.

Es hat sich gezeigt, daß während einer Mastperiode mit einem anfänglichen Futterniveau für Küken und einem weiteren Futterniveau für Broiler letztendlich also mit nur zwei Futterstandspositionen in der Futterschale ausreichende Mastergebnisse erzielt werden können, so daß mit einer Unterteilung des Innenzylinders und des Außenzylinders in jeweils zwei Zylinderabschnitte eine einfache Konstruktion, die ausreichend betriebssicher arbeitet, vorliegt.

Der Spaltbereich zwischen zwei Zylinderabschnitten des Innenzylinders bzw. des Außenzylinders bildet eine hier auch als sogenanntes "360° - Fenster" vorliegende zusätzliche Öffnung für den Austritt von Futter in die Futterschale, die neben dem unteren freien Ende des aus Innenzylinder und Außenzylinder gebildeten Fallrohres vorhanden ist. Jeder Spaltbereich zwischen den Zylinderabschnitten bildet eine frei umlaufende Öffnung, die lediglich unterbrochen ist durch die Brückenorgane. Diese können jedoch, ohne daß Festigkeits- und Stabilitätseinbußen in Kauf zu nehmen sind, in ihrer in Ausflußrichtung des Futters liegenden Ebene so dünn gehalten werden, das ihre Dicke und damit ihr Querschnitt die freie Öffnungsweite des gebildeten 360° - Fensters kaum merkbar verkleinert. Auch bei ungünstigen Verhältnissen kann es deshalb kaum zu Brückenbildungen und Verstopfungen im als umlaufendes 360° - Fenster vorliegenden Bereich der zusätzlichen Öffnungen im Mantel des Fallrohres bzw. seiner Zylinder kommen.

Bei Betätigung der im Futterförderrohr installierten Fördereinrichtung, z. B. einer Schleppkette oder einer Spirale, ist bei der erfindungsgemäß ausgestalteten Vorrichtung gewährleistet, daß jede Futterschale bis zum voreingestellten Futterniveau auch sicher mit Futter gefüllt wird. Ein Leerbleiben einzelner Futterschalen besonders im kritischen Anfangsstadium der Mastperiode für noch kleinwüchsige Küken aufgrund von Verstopfungen im Bereich der zusätzlichen Öffnungen im Fallrohr, kommt kaum noch vor.

Das gewöhnlich vertikal und somit parallel zum Boden des Stalls verlaufende Futterförderrohr kann, z. B. mittels zentral betätigbarer Seilzüge, lotrecht bewegt werden. Bei der bekannten Vorrichtung ermöglicht diese Betätigung, daß die Futterschale in Positionen gebracht werden kann, in denen sie entweder auf dem Boden des Stalls aufgesetzt oder davon abgehoben ist. Ebenso wie bei der bekannten Vorrichtung wird auch bei der erfindungsgemäßen Vorrichtung das Aufsetzen der Futterschale auf den Boden des Stalls dazu benutzt, den Außenzylinder vertikal zum Innenzylinder zu verschieben und durch diesen Verschiebeweg eine zusätzliche Futterabgabeöffnung, nämlich das um 360° umlaufende Fenster, im Fallrohr zu öffnen. Mit dieser, dem Stand der Technik vergleichbaren Wirkungsweise wird bei der erfindungsgemäßen Vorrichtung nach einer Weiterbildung jedoch erreicht, daß der endseitige Zylinderabschnitt den Spaltbereich zwischen den Zylinderabschnitten des Außenzylinders abdeckt, wenn der Außenzylinder mittels einer Anhebung des Futterförderrohres in eine gegenüber dem Innenzylinder abgesenkte Position bewegt ist, in welcher die Hubanschläge von Innen- und Außenzylinder in gegenseitiger Anlage stehen. Es ist erkennbar, daß die Ausbildung des 360° - Fensters den Vorteil hat, daß auch in der aufgesetzten Stellung, in der das Fenster freigegeben ist, ein möglicherweise auftretendes Drehen der Futterschale gegenüber dem Innenzylinder des Fallrohres keine nachteiligen Auswirkungen auf den Futterausfluß durch das 360° - Fenster hat.

Um zu verhindern, daß das Außenrohr mit der Futterschale von dem Innenzylinder abfällt, wenn das Futterförderrohr angehoben wird, ist wenigstens ein Hubanschlag vorgesehen. Bei der erfindungsgemäßen Vorrichtung ist an der Bildung des Hubanschlags des Außenzylinders ein Rezeß seiner Zylinderinnenfläche beteiligt, sowie wenigstens eine radial vom Innenzylinder vorstehende Auflageschulter für den Rezeß. Wird der Innenzylinder angehoben, indem das Futterförderrohr in einen größeren Abstand zum Boden des Stalls gebracht wird, gleitet der Innenzylinder zunächst im Außenzylinder bis die vom Innenzylinder vorstehende Auflageschulter an die durch den Rezeß im Außenzylinder gebildete Stufe anschlägt, so daß bei weiterer Anhebung des Innenzylinders, der Außenzylinder und damit die mit ihm verbundene Futterschale mitgeschleppt werden kann. In dieser Position stehen somit die an der Bildung von Hubanschlägen beteiligten Teile des Innenzylinders und des Außenzylinders, in gegenseitiger Anlage und deckt der endseitige Zylinderabschnitt des Innenzylinders den Spaltbereich zwischen den Zylinderabschnitten des Außenzylinders ab. Die zusätzliche Öffnung im Futterfallrohr, das "360° - Fenster", ist geschlossen.

Jede Auflageschulter für den Rezeß kann ein beliebiger am Innenzylinder angeordneter Vorsprung sein. Vorzugsweise ist jede Auflageschulter für den Rezeß ein Teil eines kragenflanschähnlichen Radialvorsprunges des Innenzylinders.

Damit die Brückenorgane, welche die Zylinderabschnitte verbinden, die freie Öffnungsfläche des "360° - Fensters" nicht wesentlich, also nur unbedeutend verkleinern und um dennoch die Zylinderabschnitte ausreichend stabil und fest miteinander zu verbinden, ist für die Brückenorgane eine besondere Ausgestaltung und Querschnittsform gewählt. Jedes Brückenorgan ist ein Flachsteg, dessen Stegflächenebene radial zur Achse des jeweiligen Innen- bzw. Außenzylinders verläuft. Die Anzahl der Flachstege kann variiert werden. Vier Flachstege für den Innenzylinder und sieben Flachstege für den Außenzylinder haben sich bewährt. Mit besonderem Vorteil weisen die als Flachsteg vorliegenden Brückenorgane des Außenzylinders die Form von radial über die Peripherie des Außenzylinders in die Futterschale hinein vorstehenden Paddeln bzw. Flügeln auf. Die Flügel am Außenzylinder steuern und erhalten die gleichmäßige Futterverteilung in den Futterteller, selbst dann wenn die gesamte Futterschale um das Förderrohr schwingen oder pendeln sollte und verhindern des weiteren übermäßiges Kratzen und Scharren der Tiere im Futter und damit die dadurch entstehenden Futterverluste.

Aus dem Fallrohr soll das Futter möglichst gleichmäßig abgegeben und verteilt werden. Dabei ist ein Überlaufen des Futters aus der Futterschale durch ein zu hohes Futterniveau ebenso zu vermeiden wie ein das Fressen der Tiere erschwerendes, zu niedriges Futterniveau. Für die richtige Ausdosierung des Futters in die Schale ist, wie bereits erwähnt, die Ausbildung und insbesondere auch die Einhaltung eines vorbestimmten Schüttkegels in der Futterschale maßgeblich, wobei der Schüttkegel sich wiederum beeinflussen läßt durch den Abstand zwischen im Fallrohr vorhandenen Futteraustrittsöffnungen und der Futterschale. Der Abstand der Futterschale vom unteren freien Ende des Fallrohres bzw. vom "360° - Fenster" hat somit wesentlichen Einfluß auf das Futterniveau in der Schale und vom Futterniveau ist es wiederum abhängig, ob Futteraufnahmen durch die Tiere optimal ablaufen. Eine Verstell- bzw. Einstellmöglichkeit des Abstandes zwischen der Futterschale und dem unteren freien Ende bzw. zwischen der Futterschale und dem "360° - Fenster" des Fallrohres ist vorteilhaft und ist bei der erfindungsgemäßen Vorrichtung konstruktiv dadurch verwirklicht, daß die Außenfläche eines oberen Zylinderabschnitts des Außenzylinders als Gewindespindel ausgebildet ist, und daß die freien Enden der Gitterstäbe der Schalenkuppel an einen Schraubring angeschlossen sind, der auf den als Gewindespindel ausgebildeten Bereich des Außenzylinders geschraubt ist.

Die Steigung der Gewindespindel ist vorzugsweise derart gewählt, daß bereits bei relativ geringer Drehung bzw. Winkelbewegung der Futterschale eine deutlich merkbare Veränderung des Abstandes zwischen Futterschale und dem Futterförderrohr, von dem das Fallrohr mit seinen Öffnungen abzweigt, bemerkbar ist.

Wie vorbeschrieben, fangen die Futterschalen an, sich bei einer Reinigung unter einem Wasserstrahl um eine Hochachse zu drehen. Dies Drehen ist sogar erwünscht. Die Drehbewegung hat jedoch den Nachteil, daß sich dadurch das eingestellte Futterniveau unbeabsichtigt verändern kann. Nach einer Reinigung müßten sämtliche Futterschalen der Fütterungslinie in einem Stall somit neu eingestellt werden, was mit erheblichem Arbeitsaufwand verbunden ist.

Die selbsttätige unerwünschte Verstellung bzw. Verdrehung der Futterschalen wird bei der erfindungsgemäßen Vorrichtung dadurch verhindert, daß sie wenigstens einen den Drehweg des Außenzylinders gegenüber dem Innenzylinder verhindernden zumindest jedoch begrenzenden Drehanschlag aufweist.

Dabei ist die Ausbildung und Anordnung so getroffen, daß jeder Drehanschlag wenigstens eine in einem vorbestimmten Bereich der Außenfläche des Innenzylinders angeordnete Erhebung aufweist sowie mindestens einen an der Innenfläche des Außenzylinders befindlichen Mitnehmer, bzw. Vorsprung, in dessen bei Drehung des Außenzylinders um den Innenzylinder ausgeführten Drehweg die Erhebung vorsteht. Dreht sich die Futterschale und damit der Außenzylinder, an dem die Futterschale hängt, gegenüber dem Innenzylinder, schlägt der Vorsprung spätestens nach Zurücklegung eines vorbestimmten Drehweges an die Erhebung an und sperrt eine Weiterdrehung.

Mit besonderem Vorteil ist der vorbestimmte Bereich der Außenfläche des Innenzylinders, welcher mit der Erhebung für den Drehanschlag versehen ist, sein oberes Kopfteil, das mittels vermindertem Zylinderdurchmesser gegenüber dem übrigen Teil des Innenzylinders abgesetzt ist. Die Futterschale bzw. ihr Außenzylinder kann somit nur in derjenigen Position, in welcher sie über die Hubanschläge zwischen Außen- und Innenzylinder am Innenzylinder hängt, frei um den Innenzylinder rotieren. In der oberen Position, also in einer abgesenkten Position des Futterförderrohres und somit auch des Innenzylinders, in welcher die Futterschale aufsetzt und dadurch ihr Außenzylinder gegenüber dem Innenzylinder angehoben ist, steht der Vorsprung dagegen im Wirkbereich der am oberen Kopfteil des Innenzylinders vorhandenen Erhebung, die in den Drehweg des Vorsprungs am Außenzylinder vorsteht. Der Außenzylinder und damit die Futterschale ist somit in der oberen Position nur soweit drehbar, bis die Drehbewegung durch den Drehanschlag gestoppt wird.

Die erfindungsgemäße Vorrichtung zeichnet sich auch noch dadurch aus, daß die selbständige, unkontrollierte und somit unerwünschte Verdrehung des Schraubringes gegenüber dem Außenzylinder, mit der Folge einer Verstellung des Futterniveaus in der Futterschale, dadurch verhindert wird, daß der Außenzylinder in seinem als Gewindespindel ausgebildeten Bereich wenigstens einen in radialer Richtung federelastischen Rastnocken aufweist, der mit Ausnehmungen, welche der Schraubring an seiner Innenumfangsfläche aufweist, formschlüssig verrastbar ist.

Bei der erfindungsgemäßen Vorrichtung ist es von besonderer erfinderischer Bedeutung, daß der Drehanschlag in Verbindung mit den hinsichtlich des Durchmessers abgesetzten Bereichen des Innenzylinders dazu dient, die vorbeschriebene Einstellung des Futterniveaus gegebenenfalls gegen unbeabsichtigte Betätigung mittels der Rastnocken in der hängenden Position zu sperren oder gegebenenfalls in der gehobenen Position der Schale freizugeben. Dies wird dadurch erreicht, daß die Rastnocken und die Ausnehmungen mit schräg zur Drehbewegung um die Hochachse ausgerichteten Auflaufflanken versehen sind.

Da die Rastnocken und die Ausnehmungen mit schräg zur Drehbewegung ausgerichteten Auflaufflanken versehen sind, werden die federelastischen Rastnocken bei entsprechender Kraftaufwendung während der Verdrehung abgelenkt und in einer einem Nockentrieb ähnlichen Weise aus den Ausnehmungen gelenkt. Nach dem Auslenken der Rastnocken aus den Ausnehmungen kann der Schraubring auf dem Gewinde des Außenzylinders weiter gedreht werden, wobei sich die dem Futternievau vorgebende Futterstandsposition wie vorbeschrieben ändert. Sobald die Rastnocken eine benachbarte Ausnehmung erreicht haben, rasten sie in diese Ausnehmung wieder ein oder es kann der Schraubring, unter Wiederholung der Auslenkung, noch weiter gedreht werden.

Dies ist jedoch mit besonderem Vorteil nur in der oberen Position des Außenzylinders gegenüber dem Innenzylinder möglich, weil sich aufgrund der abgesetzten Außenfläche des Innenzylinders mit vermindertem Zylinderdurchmesser genug Raum hinter den Rastnocken befindet, in den sie bei Drehung und Ausheben aus den Ausnehmungen hinein bewegt werden können. In der unteren, hängenden Position stützt die Außenfläche des Innenzylinders aufgrund ihres dort vergrößerten Außendurchmessers von hinten gegen die Rastnocken, so daß eine Freigabe der eingestellten Futterstandspositionen bzw. ein Ausheben aus den Ausnehmungen auch bei größtem Kraftaufwand nicht möglich ist.

Da bei der Reinigung die gesamte Futterlinie mit dem Fütterungsrohr angehoben und demzufolge dann nur die hängende Position des Außenzylinders gegeben ist, ist in dieser hängenden Position des Außenzylinders automatisch eine Verriegelung der vorher eingestellten Futterstandspositionen gewährleistet und ein unbeabsichtigtes Verstellen der Futterstandspositionen somit nicht möglich. Allerdings kann sich die Futterschale zwecks Durchführung von Reinigungen in der hängenden Position des Außenzylinders frei auf dem Innenzylinder drehen.

Erst in der angehobenen Position der Futterschale und des damit verbundenen Außenzylinders ist ein Verstellen der Futterstandspositionen durch Drehen des Schraubrings auf dem Gewindespindelteil des Außenzylinders möglich, weil nur in dieser Position die Rastnocken mit Hilfe der ähnlich einem Mitnehmer wirkenden Drehanschläge aus den Ausnehmungen des Schraubrings herausgelenkt werden können.

Zum Verstellen der eingestellten Futterstandsposition ist die Einheit aus Futterschale, Kuppel und Außenzylinder somit zuerst anzuheben. Anschließend kann diese Einheit um die Hochachse in Drehrichtung der gewünschten Änderung des Futterstandes solange verdreht werden, bis in Form von Vosprüngen vorliegende Mitnehmer am Außenzylinder die Erhebungen am Innenzylinder erreicht haben und der Außenzylinder gegen eine weitere Drehung gesichert ist. In der Weiterführung der Drehbewegung geben, mit zunehmender Krafteinwirkung, die Rastnocken die Futterstandspositionen frei, um nach einem vorbestimmten Drehweg wieder in die nächste Futterstandsposition einrasten zu können.

Zur Verbesserung der Reinigungswirkung und Erleichterung der Reinigungsarbeiten dient bei der erfindungsgemäßen Vorrichtung nach einer Weiterbildung die Maßnahme, daß die Futterschale einen Futterteller aufweist, der im Bereich seines Tellerrandes Verbindungsorgane zur Verbindung mit der Schalenkuppel aufweist. Die Verbindungsorgane können ein Klappgelenk und wenigstens ein Verriegelungs- bzw. Halteelement aufweisen. Statt einer Verbindung mit der Schalenkuppel, kann der Futterteller im Bereich seines Tellerrandes auch aus zwei Tellerrandabschnitten gebildet sein, von denen einer an die Gitterstäbe der Schalenkuppel angeschlossen ist und die über mindestens ein Klappgelenk und wenigstens ein Verriegelungs- bzw. Halteelement, z. B. Klammern, miteinander verbunden sind. Von besonderem Vorteil ist ein aushakbares Klappgelenk, so daß ein Futterteller gegebenenfalls ausgetauscht werden könnte.

Der Futterteller ist in der Mitte kegelförmig ausgearbeitet, so daß aus der das Fallrohr bildenden Einheit aus Innenzylinder und Außenzylinder in den Futterteller hineinfallendes Futter nach außen rutschen kann.

Zur Verbesserung der Futteraufnahme durch die Tiere ist eine Ringfläche des Futtertellers, die um das unter dem Fallrohr befindliche Tellerzentrum herum verläuft, in Freßsektionen unterteilt. Jede Freßsektion besteht aus wenigstens einer Tasche, einem Feld oder dergleichen durch Vertiefung bzw. Erhebung abgegrenzte Einformung.

Mit besonderem Vorteil ist die Anzahl der Freßsektionen gleich einem Vielfachen der Anzahl der als Paddel bzw. Flügel ausgebildeten Brückenorgane des Außenzylinders.

Werden beispielsweise auf den Innenumfang des Schraubrings sieben Ausnehmungen verteilt angeordnet, so bestimmen sich dadurch sieben Futterstandspositionen, die durch Verdrehen des Schraubrings gegenüber dem Außenzylinder eingestellt werden können. Der Außenzylinder selbst weist in seinem Gewindebereich wenigstens einen, vorzugsweise zwei Rastnocken auf, die so am Umfang des Außenzylinders sitzen, daß sie gleichzeitig in jeweils zugeordnete Ausnehmungen des Schraubrings einrasten können. Bei sieben möglichen Futterstandspositionen ist es zweckmäßig, auch sieben Brückenorgane am Umfang des Außenzylinders anzuordnen und diese als Paddel oder Flügel auszubilden, damit sie die gleichmäßige Futterverteilung in den Futterteller steuern und erhalten. Im Falle des in 14 Sektionen unterteilten Futtertellers befinden sich dann jeweils zwei Felder oder Taschen des Futtertellers zwischen zwei als Flügel oder Paddel vorliegenden Brückenorgane des Außenzylinders, so daß es den Tieren einerseits leicht möglich ist, Futter aufzunehmen und auf der anderen Seite ist es den Tieren erschwert, Futter seitlich aus der Futterschale heraus zu schleudern. Aufgrund der gewählten sieben Futterstandspositionen in der Gewindeverbindung zwischen Außenzylinder und Schraubring und aufgrund der Scharnierverbindung zwischen Futterteller und Schalenkuppel lassen sich die sieben Paddel bzw. Flügel in Bezug zu den Feldern oder Taschen des Futtertellers in eindeutige Übereinstimmung bringen.

Ein Ausführungsbeispiel der Erfindung, aus dem sich weitere erfinderische Merkmale ergeben, ist in der Zeichnung dargestellt. Es zeigen:
- Fig. 1: eine Ansicht der am Futterförderrohr hängenden Schaleneinrichtung einer Vorrichtung für die Fütterung von Broilern,
- Fig. 2: eine Ansicht eines Außenzylinders,
- Fig. 3: eine Seitenansicht des Außenzylinders gemäß Fig. 2 in einem Halbschnitt,
- Fig. 4: eine Ansicht des Innenzylinders, mit oberem Rohradapter zur Befestigung am Futterförderrohr ohne schließendes Oberteil,
- Fig. 5: eine Seitenansicht des Innenzylinders in einem Halbschnitt,
- Fig. 6: eine Seitenansicht der Vorrichtung entsprechend Fig. 1 in einem Halbschnitt bei angehobenem Futterförderrohr, so daß die Futterschale über dem Boden eines Stalles frei hängt,
- Fig. 7: die aus Innenzylinder und darauf geführtem Außenzylinder gebildete Einheit eines Fallrohres im Schnitt entlang der Linie VII - VII in Fig. 6,
- Fig. 8: eine Seitenansicht der Vorrichtung bei abgesenktem Futterförderrohr, so daß die Futterschale auf dem Boden des Stalls aufgesetzt ist,
- Fig. 9: einen Schnitt durch das aus Innen zylinder und Außenzylinder gebildete Fallrohr der Vorrichtung gemäß Fig. 8 im Schnitt entlang der Linie IX - IX in Fig. 8, und
- Fig. 10: eine Ansicht einer Futterschale, bei der zwecks Verdeutlichung ihres Futtertellers die Schalenkuppel weggelassen wurde.

Die Vorrichtung für die Fütterung von in einem Stall freilaufend gehaltenem Mastgeflügel, insbesondere Broiler besteht aus wenigstens einem über dem Boden des Stalls heb- und senkbar gehaltenen Futterförderrohr 1, das über die gesamte Stallänge verläuft und mit einer darin befindlichen Förderspirale oder einem Seil oder Kette mit Förderscheiben schüttfähiges Futter zu einzelnen an dem Futterförderrohr 1 hängenden Schaleneinrichtungen 2 transportiert. Die vorbeschriebenen Teile können in ihrer Gesamtheit auch als Futterlinie bezeichnet werden.

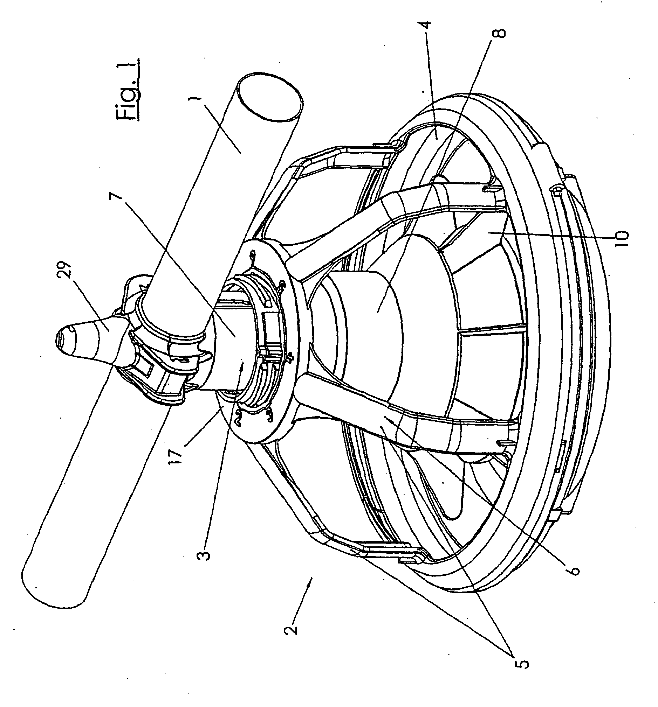

In Fig. 1 ist lediglich ein Teil des Futterförderrohres 1 mit einer daran im Bereich einer Abzweigöffnung im Futterförderrohr 1 hängenden Schaleneinrichtung 2 dargestellt. Die Schaleneinrichtung 2 umfaßt ein von der hier nicht weiter sichtbaren Abzweigöffnung abgehendes Fallrohr 3 und eine unter dem Fallrohr 3 befindliche Futterschale 4 mit aus speichenartig verlaufenden Gitterstäben 5 gebildeter Schalenkuppel 6. Dabei besteht das Fallrohr 3 aus einem von der hier nicht sichtbaren Abzweigöffnung abgehenden Innenzylinder 7 sowie einem den Innenzylinder 7 umschließenden Außenzylinder 8 an dem die Schale 4 mittels der Gitterstäbe 5 ihrer Schalenkuppel 6 derart hängt, daß sie bei abgesenktem Futterförderrohr 1 aufsetzt, insbesondere auf dem hier nicht weiter dargestellten Boden 34 des Stalls aufsetzt. Der Außenzylinder 8 ist an dem Innenzylinder 7 drehbar sowie heb- und senkbar geführt, wobei wenigstens ein den Heb- und Senkweg begrenzender Hubanschlag vorgesehen ist, der nachfolgend noch näher beschrieben wird.

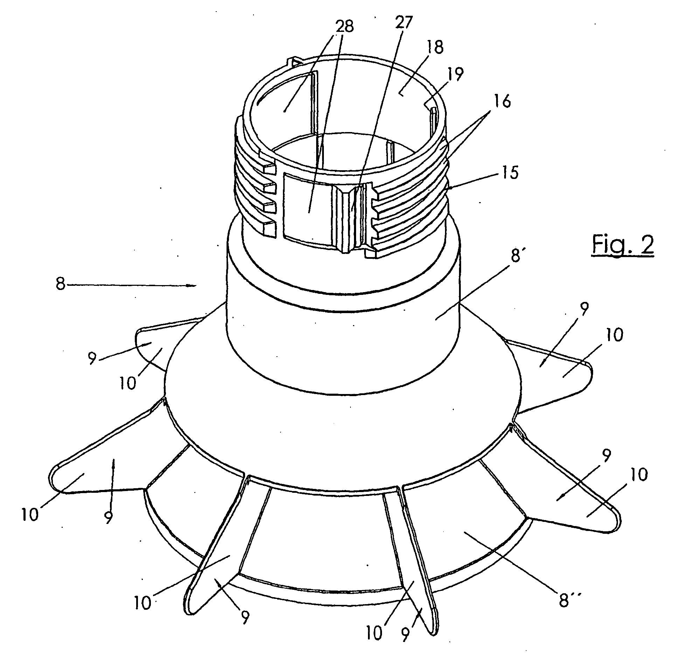

Fig. 2 zeigt eine Ansicht des Außenzylinders 8.

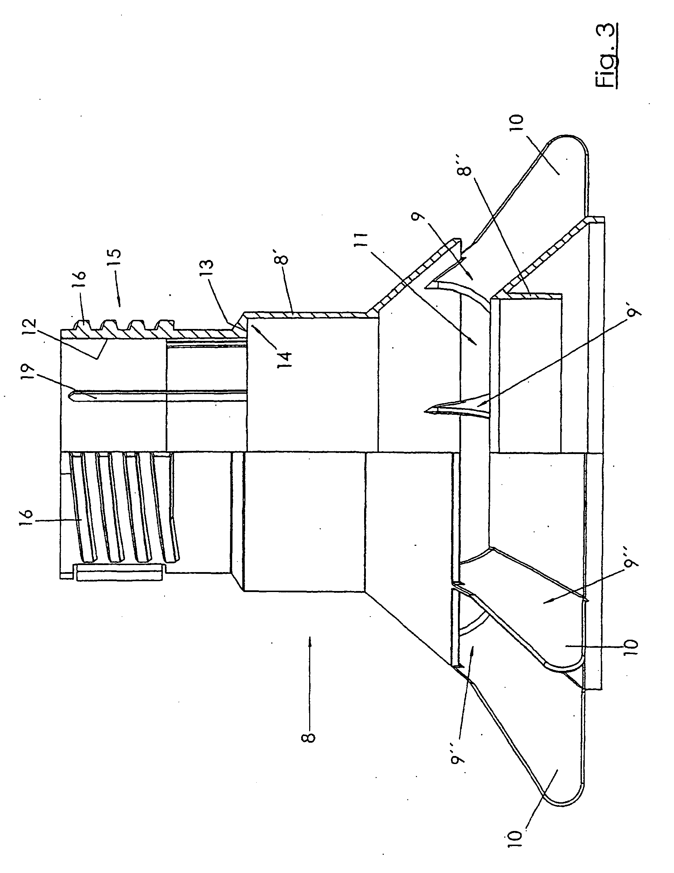

In Fig. 3 ist eine Seitenansicht des Außenzylinders 8 gemäß Fig. 2 in einem Halbschnitt dargestellt.

Nachstehend werden die Figuren 2 und 3 näher erläutert:

Der Außenzylinder 8 besteht aus einander benachbarten zueinander koaxialen Zylinderabschnitten 8' und 8''. Die Zylinderabschnitte 8' und 8'' sind miteinander verbunden über Brückenorgane 9, von denen jedes als über die Peripherie des Außenzylinders 8 in die Futterschale 4 hinein vorstehendes Paddel bzw. als Flügel 10 ausgebildet ist. Die Brückenorgane 9 überbrücken den Spaltbereich 11, der dem Abstand zwischen den Zylinderabschnitten 8' und 8'' des Außenzylinders 8 entspricht. Die Zylinderinnenfläche 12 des Außenzylinders 8, bzw. hier seines oberen Zylinderabschnittes 8' weist einen Rezeß 13 auf, der Teil eines Hubanschlags 14 ist. Die Außenfläche des oberen Zylinderabschnitts 8' des Außenzylinders 8 ist im oberen Endbereich als Gewindespindel 15 ausgebildet, die Gewindegänge 16 hat.

Der Außenzylinder besteht aus geeignetem Kunststoff, so daß die Gewindegänge 16 und damit die Gewindespindel 15 problemlos bei der Herstellung des Außenzylinders 8 ausgeformt werden kann.

Wie Fig. 1 auch zeigt, sind die freien Enden der Gitterstäbe 5 der Schalenkuppel 6 an einen Schraubring 17 angeschlossen, der auf den als Gewindespindel 15 ausgebildeten Bereich des Zylinderabschnittes 8' des Außenzylinders 8 schraubbar ist.

Bei Drehung der Futterschale 4, relativ zum Außenzylinder 8, bewirkt die Gewindespindel 15 ein Verstellen der Futterschale 4 in höhenmäßiger Hinsicht zum unteren Ende des Zylinderabschnitts 8'' mit den Flügeln 10 des Außenzylinders 8.

Die Figuren 2 und 3 lassen des weiteren erkennen, daß ein den Drehweg des Außenzylinders 8 gegenüber dem Innenzylinder 7 begrenzender Drehanschlag einen hier an der Innenfläche 18 des Außenzylinders 8 befindlichen Mitnehmer 19 aufweist, in dessen bei Drehung des Außenzylinders 8 um den Innenzylinder 7 herum ausgeführten Drehweg die an der Außenfläche 20 des Innenzylinders 7 angeordnete Erhebung 21 vorsteht.

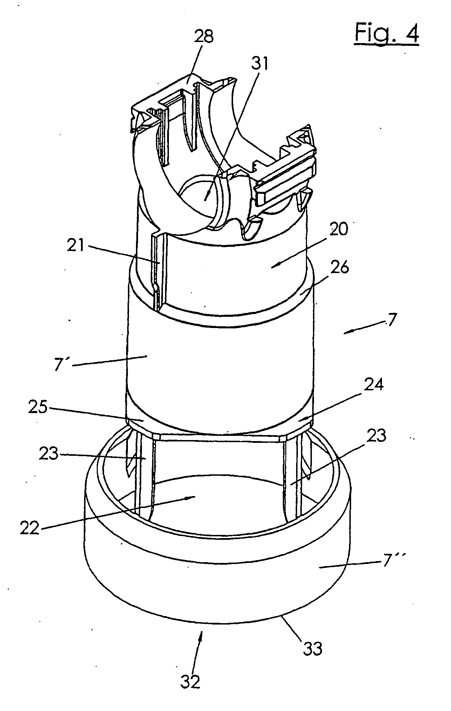

Fig. 4 zeigt eine Ansicht des Innenzylinders 7, der aus Zylinderabschnitten 7' und 7'' besteht, wobei der offene Spaltbereich zwischen den Zylinderabschnitten 7' und 7" wieder durch flachstegförmige Brückenorgane 23 überbrückt wird. In Fig. 4 ist das Teil des Hubanschlags 14 sichtbar, das bei dem Innenzylinder 7 als wenigstens eine radial vom Innenzylinder 7 vorstehende Auflageschulter 24 für den Rezeß 13 im Außenzylinder 8 ausgebildet ist.

Fig. 4 verdeutlicht, daß jede Auflageschulter 24 für den Rezeß 13 Teil eines kragenflanschähnlichen Radialvorsprungs 25 des Innenzylinders 7 ist. Fig. 4 läßt außerdem erkennen, daß die Außenfläche 20 des Innenzylinders 7 im oberen Bereich, und somit im Bereich seines Kopfteils, mittels vermindertem Zylinderdurchmesser gegenüber dem übrigen Teil des Zylinderabschnitts 7' des Innenzylinders 7 abgesetzt ist. Die Absetzungsstufe ist mit 26 bezeichnet.

Fig. 2 läßt des weiteren erkennen, daß zur Sicherung gegen Verdrehung der aus dem Schraubring 17 (Fig. 1) mit der Schalenkuppel 6 und der Futterschale 4 bestehenden Baueinheit, an jedem Außenzylinder 8 in seinem als Gewindespindel 15 ausgebildeten Bereich zwei federelastische Rastnocken 27 vorgesehen sind. Jede Rastnocke 27 ist über eine federelastische Lasche 28 mit dem Außenzylinder 8 verbunden. Dabei ist die Ausformung derart getroffen, daß die Laschen 28 durch Einschnitte gebildete Wandteile des Außenzylinders sind, die bei radialem Druck von außen nach innen federn können und elastisch in die Ausgangslage zurückbewegt werden, wenn der Druck nachläßt. In der drucklosen Ausgangslage fluchten die Laschen 28 wieder mit der Wand des Außenzylinders 8.

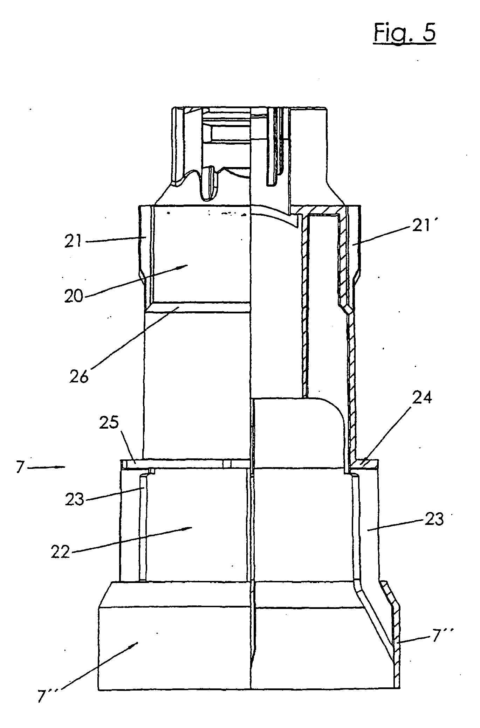

Fig. 5 zeigt eine Seitenansicht des Innenzylinders, wobei die rechte Hälfte des Innenzylinders im Längsschnitt gezeichnet ist.

Gleiche Bauteile sind mit gleichen Bezugszahlen bezeichnet.

Fig. 4 läßt insbesondere auch erkennen, daß der Innenzylinder 7 in seinem oberen freien Ende an der Ausbildung eines Rohradapters beteiligt ist, indem eine Schalenhälfte 29 des Rohradapters an den Innenzylinder 7 angeformt ist. Diese Schalenhälfte kann durch Ansetzen eines Oberteils 30, das in Fig. 1 sichtbar ist, zum Rohradapter ergänzt werden, der das Fütterungsrohr 1 im Bereich einer nicht weiter dargestellten Abzweigöffnung umschließt, derart, daß die Abzweigöffnung mit der Einfallöffnung 31 im oberen Schalenteil 29 des Innenzylinders 7 fluchtet. Aus dem Futterförderrohr austretendes Futter tritt über die Abzweigöffnung und die Einfallöffnung 31 in den Innenzylinder ein und kann in die Futterschale über den Spaltbereich 22 oder die untere Fallöffnung 32 fallen. Die untere Fallöffnung 32 wird umgrenzt von den unteren Rändern 33 des Zylinderabschnitts 7''.

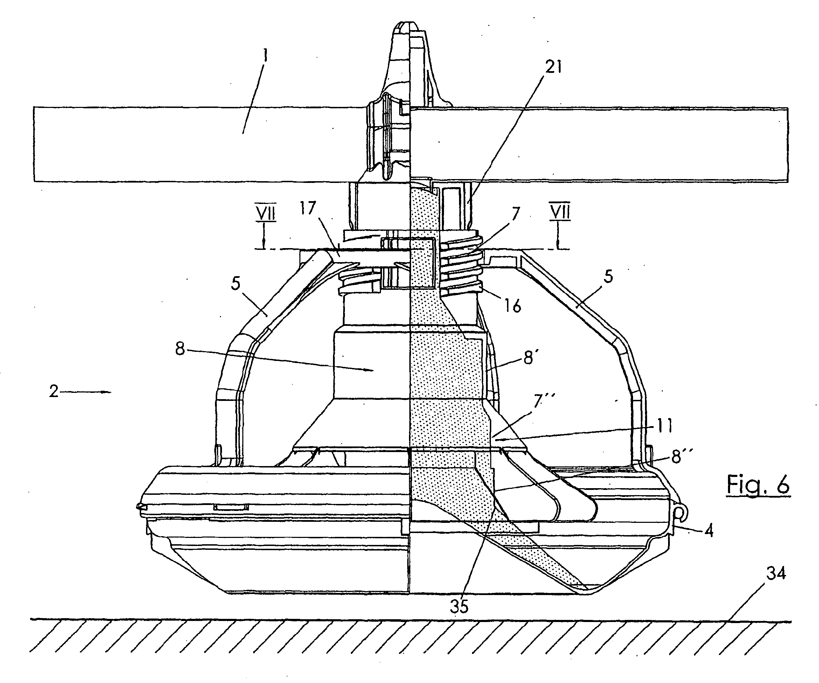

Fig. 6 zeigt in einer Seitenansicht eine an einem Futterförderrohr 1 hängende Schaleneinrichtung 2, wobei die rechte Seite im Schnitt gezeichnet ist. Gleiche Bauteile sind mit gleichen Bezugszahlen bezeichnet.

Fig. 6 läßt erkennen, daß der Innenzylinder 7 derart ausgebildet ist, daß sein endseitiger Zylinderabschnitt 7'' den Spaltbereich 11 zwischen den Zylinderabschnitten 8 und 8'' des Außenzylinders 8 abdeckt, wenn der Außenzylinder 8 mittels einer Anhebung des Futterförderrohres 1 in eine gegenüber dem Innenzylinder 7 abgesenkte Position bewegt ist, in welcher die den Hubanschlag 14 bildenden Teile in gegenseitiger Anlage stehen. Bei diesem Ausführungsbeispiel ist in Fig. 6 sichtbar, daß der Außenzylinder 8 mit der durch seinen Rezeß 13 in dem Zylinderabschnitt 8' gebildeten Stufenfläche auf der Auflageschulter 24 des Radialvorsprungs 25 des Innenzylinders 7 aufliegt. Aus dem Futterförderrohr in den Innenzylinder 7 eintretendes Futtermittel ist hier punktiert dargestellt und rieselt in die Futterschale 4, wobei es aus der unteren Fallöffnung 32 des Innenzylinders 7 in den Zylinderabschnitt 8'' des Außenzylinders 8 rieselt und von dort direkt in die Futterschale 4. Das Futter bedeckt den kegelförmig geformten Boden der ebenfalls aus Kunststoff hergestellten Futterschale 4 in einer flachen Schüttung, wie sie hier sichtbar ist. Auf dem Boden 34 eines Stalls laufendes Geflügel kann das in der Tiefe der Futterschale 4 befindliche Futter erreichen.

Die Höhe des Schüttkegels aus Futter über dem Boden der Futterschale 4 ist einstellbar. Zur Regelung des Futterniveaus, bzw. zur Einstellung der sogenannten Futterstandsposition wird der Schraubring 17, an den die Gitterstäbe 5 der Schalenkuppel 6 angeschlossen sind, um eine Hochachse gedreht. Je nach Drehweg und Steigung der Gewindegänge 16 verschiebt sich die Position der Schale gegenüber dem unteren Austrittsrand 35 des unteren freien Endes des Außenzylinderabschnittes 8".

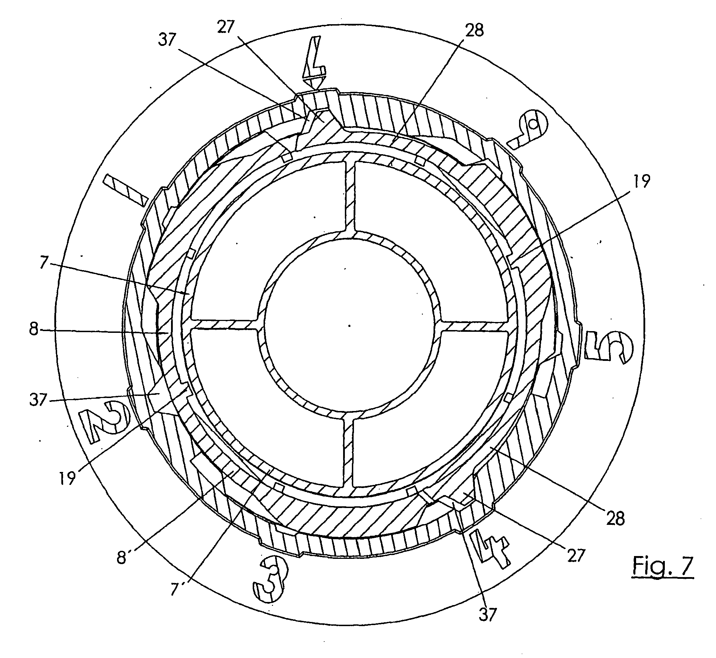

Fig. 7 ist eine Schnittansicht entlang der Linie VII - VII in Fig. 6. Gleiche Bauteile sind mit gleichen Bezugszahlen bezeichnet. Fig. 7 verdeutlicht, daß der Innenzylinder 7, dessen Zylinderabschnitt 7' hier sichtbar ist, vom Außenzylinder 8, bzw. dessen hier sichtbaren Zylinderabschnitt 8' umfaßt ist. Der Außenzylinder ist in der hier dargestellten Position somit um den Innenzylinder 7 frei drehbar. In Fig. 7 sind die an der Innenfläche des Außenzylinders 8 angeordneten Mitnehmer 19 zu sehen.

Der Schraubring 17 weist an seiner Innenumfangsfläche 36 Ausnehmungen 37 auf. Mit den Ausnehmungen 37 sind Rastnocken 27, die an den federelastischen Laschen 28 sitzen, verrastbar, so daß der Schraubring 17 bei in die Ausnehmungen 37 eingerasteten Rastnocken 27 gegenüber dem Außenzylinder 8 nicht verdreht werden kann. Das einmal eingestellte Futterniveau kann eingehalten werden. Bei Angriff von Drehkräften an der Futterschale bzw. über dessen Schalenkuppel am Schraubring 17 verdreht sich die aus Außenzylinder 8, Schraubring 17, Schalenkuppel 6 und Futterschale 4 bestehende Einheit lediglich gegenüber dem Innenzylinder 7. Der Innenzylinder 7 kann sich aufgrund seiner Abhängung am Futterförderrohr 1 nicht mitdrehen.

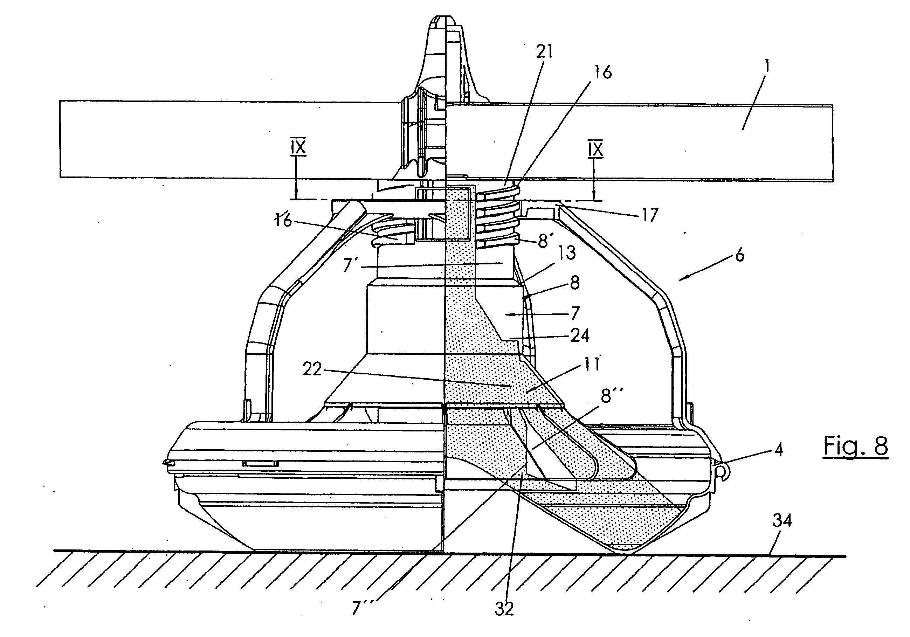

Fig. 8 zeigt eine Seitenansicht entsprechend Fig. 6, wobei wiederum die rechte Hälfte geschnitten dargestellt ist. Das Futterförderrohr ist in der in Fig. 8 gezeigten Position abgesenkt, so daß es in geringerem Abstand über den Boden 34 des Stalls verläuft. Die Futterschale 4 setzt in der in Fig. 8 gezeigten Stellung auf dem Boden 34 des Stalls auf, wodurch die aus Außenzylinder mit Schalenkuppel 6 und Futterschale 4 gebildete Einheit gegenüber dem Innenrohr 7 angehoben ist. In dieser Position stehen den Hubanschlag 14 bildender Rezeß 13 und Auflageschulter 24 des Innenzylinders 7 nicht mehr in gegenseitiger Anlage. Der Außenzylinder 8 mit seinen Zylinderabschnitten 8' und 8" ist also gegenüber dem Innenzylinder so weit angehoben, daß der Spaltbereich 11 zwischen den Zylinderabschnitten 8' und 8'' des Außenzylinders 8 mit dem Spaltbereich 22 zwischen den Zylinderabschnitten 7' und 7'' des Innenzylinders 7 kongruiert. Durch die miteinander kongruierenden, offenen Spaltbereiche 11 und 22, die ein "360° - Fenster" bilden, kann das Futter zusätzlich zur unteren Fallöffnung 32 in die Futterschale 4 gelangen, wie es hier punktiert dargestellt ist. Das Futterniveau ist in der Futterschale 4 wesentlich höher, so daß auch Jungtiere, beispielsweise Küken, über den Rand der Futterschale 4 an das nunmehr in der Futterschale 4 höher stehende Futter gelangen können.

In Fig. 8 ist auch angedeutet, daß der obere Bereich des Zylinderabschnitts 8' des Außenzylinders 8, der mit Gewindegängen 16 versehen ist, auf die der Schraubring 17 geschraubt ist, nunmehr soweit angehoben sind, daß die hier nicht sichtbaren Mitnehmer 19 mit einer Erhebung 21 oder 21' des Innenzylinders 7 in Wirkverbindung gebracht werden können.

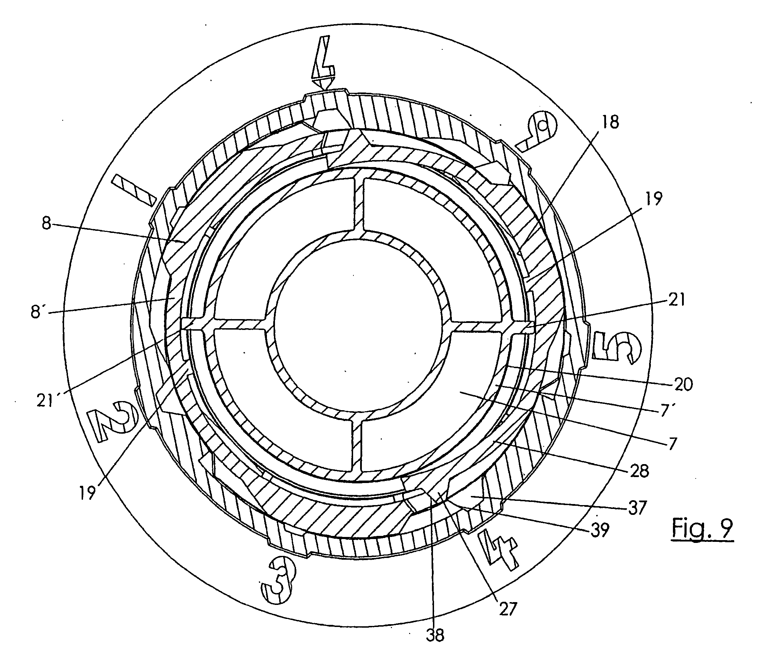

Fig. 9 zeigt wieder einen Schnitt in der Ebene IX - IX in Fig. 8. Gleiche Bauteile sind mit gleichen Bezugszahlen bezeichnet.

In Fig. 9 ist sichtbar, daß die Erhebungen 21 und 21' an der Außenfläche 20 des Zylinderabschnitts 7' des Innenzylinders 7 an die Mitnehmer 19 anschlagen können, die von der Innenfläche 18 des Zylinderabschnitts 8' des Außenzylinders 8 vorstehen. Die Mitnehmer 19 des feststehenden Innenzylinders 7 behindern eine Weiterdrehung des Außenzylinders 8 über die Position der Erhebung 21 und 21' hinaus. Der Außenzylinder 8 kann deshalb jeweils nur um 180° gedreht werden und sodann wird die Weiterdrehung durch die Erhebung 21 bzw. 21' gestoppt. Wird der Außenzylinder trotzdem weitergedreht, beispielsweise um das Futterniveau mit Hilfe der Gewinde am Außenzylinder und mit Hilfe des Schraubrings 17 zu verstellen, werden die Rastnocken 27 aufgrund ihrer Schrägflanken 38 aus den ebenfalls über Schrägkanten 39 verfügende Ausnehmungen 37 im Schraubring gedrückt. Die Rastnocken 27 werden dabei radial nach innen abgelenkt, und zwar gegen die elastische Rückstellkraft der Laschen 28. Bei entsprechender Weiterdrehung in eine nächste Futterposition, die hier durch Zahlen auf dem Schraubring angedeutet ist, können die Rastnocken 27 wieder in eine nächste Ausnehmung 37 einrasten, wie es in Fig. 7 dargestellt ist.

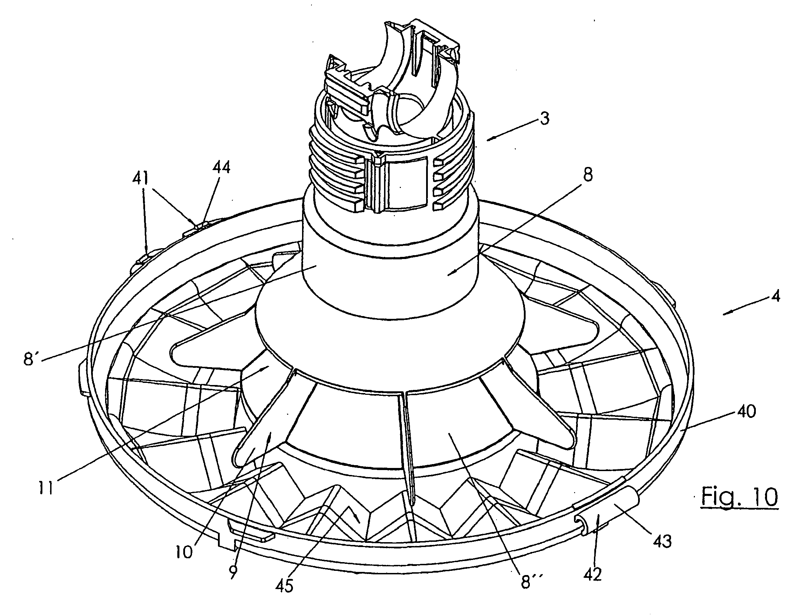

Fig. 10 zeigt die Ansicht einer Schaleneinrichtung, deren Schalenkuppel zwecks Verdeutlichung der inneren Ausgestaltung der Futterschale 4 weggelassen wurde. Gleiche Bauteile sind mit gleichen Bezugszahlen bezeichnet.

Fig. 10 verdeutlicht insbesondere, daß die Futterschale 4 einen Futterteller aufweist, der im Bereich seines Tellerrandes 40 Verbindungsorgane 41 und 42 zur Verbindung mit der hier nicht sichtbaren Schalenkuppel 6 aufweist. Die Verbindungsorgane 41 und 42 umfassen ein Klappgelenk 43 und wenigstens ein Verriegelungs- bzw. Halteelement 44. Eine Ringfläche des Futtertellers, die um das unter dem Fallrohr 3 befindliche Tellerzentrum herum verläuft, ist in Freßsektionen unterteilt, wobei jede Freßsektion aus wenigstens einer Tasche, einem Feld oder dergleichen durch Vertiefung bzw. Erhebung abgegrenzte Einformung 45 besteht. Die Anzahl der Freßsektionen ist gleich einem Vielfachen der Anzahl der als Paddel bzw. Flügel 10 ausgebildeten Brückenorgane 9 des Außenzylinders 8, von dem hier die Zylinderabschnitte 8' und 8'' sichtbar sind, mit dem dazwischen befindlichen Spaltbereich 11.

## Patentansprüche

1. Vorrichtung für die Fütterung von in einem Stall freilaufend gehaltene Geflügel, insbesondere Mastgeflügel, vorzugsweise Broiler, mit mindestens einem über dem Boden des Stalls heb- und senkbar gehaltenen Futterförderrohr (1), das eine Reihe von Abzweigöffnungen hat, von denen jede einer am Förderrohr hängenden Schaleneinrichtung (2) zugeordnet ist, die ein von der Abzweigöffnung abgehendes Fallrohr (3) und eine unter dem Fallrohr befindliche Futterschale mit aus speichenartig verlaufenden Gitterstäben gebildeter Schalenkuppel aufweist, wobei das Fallrohr aus einem von der Abzweigöffnung abgehenden Innenzylinder (7) sowie einem den Innenzylinder umschließenden Außenzylinder (8) besteht, an dem die Schale mittels der Gitterstäbe ihrer Schalenkuppel (6) derart hängt, daß sie bei abgesenktem Futterförderrohr aufsetzt, insbesondere auf dem Boden (34) des Stalls aufsetzt, wobei der Außenzylinder an dem Innenzylinder drehbar sowie heb- und senkbar geführt ist und wenigstens ein den Heb- und Senkweg begrenzender Hubanschlag vorgesehen ist, wobei
die Außenfläche (20) eines oberen Zylinderabschnittes (8') des Außenzylinders (8) als Gewindespindel ausgebildet ist, die freien Enden der Gitterstäbe (5) der Schalenkuppel (6) an einen Schraubring (17) angeschlossen sind, der auf den als Gewindespindel (15) ausgebildeten Bereich des Außenzylinders (8) geschraubt ist, der Außenzylinder (8) in seinem als Gewindespindel (15) ausgebildeten Bereich wenigstens einen in radialer Richtung federelastischen Rastnocken (27) aufweist, der Schraubring (17) der Schalenkuppel (6) an seiner Innenumfangsfläche (36) Ausnehmungen (37) aufweist, mit welchen die Rastnocken (27) formschlüssig verrastbar sind, ein vorbestimmter Bereich der Außenfläche (20) des Innenzylinders (7) sein oberes Kopfteil ist, das mittels vermindertem Zylinderdurchmesser gegenüber dem übrigen Teil des Innenzylinders (7) abgesetzt ist und sie wenigstens einen den Drehweg des Außenzylinders (8) gegenüber dem Innenzylinder (7) begrenzenden Drehanschlag aufweist, und
jeder Drehanschlag wenigstens eine in einem vorbestimmten Bereich der Außenfläche (20) des Innenzylinders (7) angeordnete Erhebung (21, 21') aufweist sowie mindestens einen an der Innenfläche (18) des Außenzylinders (8) befindlichen Mitnehmer (19), in dessen bei Drehung des Außenzylinders (8) um den Innenzylinder (7) ausgeführten Drehweg die Erhebung (21, 21') vorsteht.

2. Vorrichtung nach Anspruch 1, **dadurch gekennzeichnet, daß** die Rastnocken (27) und die Ausnehmungen (37) schräg zur Drehbewegung ausgerichtete Auflaufflanken (38. 39) aufweisen.

3. Vorrichtung nach einem der Ansprüche 1 bis 2, **dadurch gekennzeichnet, daß** der Außenzylinder (8) und der Innenzylinder (7) jeweils aus einander benachbarten, zueinander koaxialen Zylinderabschnitten (8', 8". 7'. 7") bestehen, wobei einander zugekehrte Stirnrandbereiche der Zylinderabschnitte (8'. 8". 7'. 7") miteinander verbunden sind über Brückenorgane (9), die einen Spaltbereich (11, 22) überbrücken, der dem Abstand zwischen den Zylinderabschnitten (8'. 8", 7', 7") entspricht.

4. Vorrichtung nach Anspruch 3, **dadurch gekennzeichnet, daß** der Innenzylinder (7) derart ausgebildet ist. daß sein endseitiger Zylinderabschnitt (7") den Spaltbereich (11, 22) zwischen den Zylinderabschnitten (8', 8") des Außenzylinders (8) abdeckt, wenn derAußenzylinder (8) mittels einer Anhebung des Futterförderrohres (1) in eine gegenüber dem Innenzylinder (7) abgesenkte Position bewegt ist. in welcher die Hubanschläge (14) von Innenzylinder (7) und Außenzylinder (8) in gegenseitiger Anlage stehen.

5. Vorrichtung nach einem der Ansprüche 3 und 4, **dadurch gekennzeichnet, daß** der Hubanschlag (14) aus einem Rezeß (13) der Zylinderinnenfläche (12) des Außenzylinders (8) und wenigstens einer radial vom Innenzylinder (7) vorstehende Auflageschulter (24) für den Rezeß (13) besteht.

6. Vorrichtung nach Anspruch 5, **dadurch gekennzeichnet, daß** jede Auflageschaler (24) für den Rezeß (13) Teil eines kragenflanscnähnlichen Radialvorsprunges (25) des Innenzylinders (7) ist.

7. Vorrichtung nach einem der Ansprüche 3 bis 6, **dadurch gekennzeichnet, daß** jedes Brückenorgan (9) ein Flachsteg ist, dessen Stegflächenebene radial zur Achse des jeweiligen Innenzylinders (7) bzw. Außenzylinders (8) ausgerichtet ist.

8. Vorrichtung nach Anspruch 7, **dadurch gekennzeichnet, daß** die als Flachsteg vorliegende Brükkenorgane (9) des Außenzylinders (8) die Form von radial über die Peripherie des Außenzylinders (8) in die Futterschale (4) hinein vorstehenden Paddeln bzw. Flügeln (10) aufweisen.

9. Vorrichtung nach einem der vorhergehenden An-Vorrichtung nach einem der vorhergehenden Ansprüche, **dadurch gekennzeichnet, daß** die Futterschale (4) einen Futterteller aufweist, der im Bereich seines Tellerrandes (40) Verbindungsorgane (41, 42) zur Verbindung mit der Schalenkuppel (6) aufweist.

10. Vorrichtung nach Anspruch 9, **dadurch gekennzeichnet, daß** die Verbindungsorgane (41, 42) ein Klappgelenk (43) und wenigstens ein Verriegelungs- bzw. Halteelement (44) aufweisen.

11. Vorrichtung nach einem der Ansprüche 9 und 10, **dadurch gekennzeichnet, daß** eine Ringfläche des Futtertellers, die um das unter dem Fallrohr (3) befindliche Tellerzentrum herum verläuft, in Freßsektionen unterteilt ist.

12. Vorrichtung nach Anspruch 11, **dadurch gekennzeichnet, daß** jede Freßsektion aus wenigstens einer Tasche, einem Feld oder dergleichen durch Vertiefung bzw. Erhebung (21, 21') abgegrenzt Einformung (45) besteht.

13. Vorrichtung nach einem der Ansprüche 11 und 12, **dadurch gekennzeichnet, daß** die Anzahl der Freßsektionen gleich einem vielfachen der Anzahl der als Paddel bzw. Flügel (10) ausgebildeten Brükkenorgane (9) des Außenzylinders (8) ist.

## Claims

1. A device for feeding free-range poultry kept in a feedlot, in particular fattened poultry, preferably broilers, with at least one feed conveying tube (1) which is mounted so that it can be raised and lowered above the floor of the feedlot and has a number of branch openings, each of which is assigned to a tray device (2) suspended from the conveyor tube, having a drop tube (3) which branches off from the branch opening and has a feed tray situated beneath the drop tube with a tray dome formed by grating bars running in the form of spokes, whereby the drop tube consists of an inside cylinder (7) branching off from the branch opening and an outside cylinder (8) that encloses the inside cylinder, the tray being suspended from the outside cylinder by means of the grating bars of its tray dome (6) such that it sits in particular on the floor (34) of the feedlot when the feed conveyor tube is lowered, whereby the outside cylinder is guided so that it can be rotated as well as raised and lowered on the inside cylinder and at least one lift stop that limits the lifting and lowering movement is provided, wherein
the outside surface (20) of an upper cylindrical section (8') of the outside cylinder (8) is designed as a threaded spindle (15) and the free ends of the grating bars (5) of the tray dome (6) are connected to a threaded ring (17) which is screwed onto the area of the outside cylinder (8) designed as a threaded spindle (15), the outside cylinder (8) has at least one catch cog (27), which is elastic in the radial direction, in its area which is designed as a threaded spindle (15), the threaded ring (17) of the tray dome (6) has recesses (37) on its inside circumferential surface (36) with which the catch cogs (27) can be locked in a form-fitting manner, a predetermined area of the outside surface (20) of the inside cylinder (7) is its upper head part which is set back with respect to the remaining part of the inside cylinder (7) due to the reduced cylinder diameter, and it has at least one rotational step which limits the rotation of the outside cylinder (8) with respect to the inside cylinder (7), and each rotational stop has at least one elevation (21, 21') arranged in a predetermined area of the outside surface (20) of the inside cylinder (7) and at least one follower (19) situated on the inside surface (18) of the outside cylinder (8), with the elevation (21, 21') protruding in its path of rotation about the inside cylinder (7) when the outside cylinder (8) is rotated.

2. The device according to Claim 1, **characterized in that** the catch cogs (27) and the recesses (37) have abutting sides (38, 39) aligned at an inclination to the direction of rotation.

3. The device according to any one of Claims 1 to 2, **characterized in that** the outside cylinder (8) and the inside cylinder (7) each consist of adjacent coaxial cylindrical sections (8', 8'', 7', 7'') with facing end areas of the cylinder sections (8', 8'', 7', 7'') being joined together by bridge elements (9) bridging a gap area (11, 22) corresponding to the distance between the cylinder sections (8', 8'', 7', 7'').

4. The device according to Claim 3, **characterized in that** the inside cylinder (7) is designed so that its cylinder section (7'') on the end covers the gap region (11, 22) between the cylinder sections (8', 8'') of the outside cylinder (8) when the outside cylinder (8) is moved into a position that is lowered with respect to the inside cylinder (7) by raising the feed conveyor tube (1), in which position the lift stops (14) of the inside cylinder (7) and the outside cylinder (8) are in mutual contact.

5. The device according to one of Claims 3 and 4, **characterized in that** the lift stop (14) consists of a recess (13) on the inside cylinder surface (12) of the outside cylinder (8) and at least one supporting shoulder (24) for the recess (13), said shoulder protruding radially away from the inside cylinder (7).

6. The device according to Claim 5, **characterized in that** each supporting shoulder (24) for the recess (13) is part of a radial projection (25) resembling a collar flange on the inside cylinder (7).

7. The device according to one of Claims 3 to 6, **characterized in that** each bridge element (9) is a flat web whose web face plane is aligned radially with the axis of the respective inside cylinder (7) and/or outside cylinder (8).

8. The device according to Claim 7, **characterized in that** the bridge elements (9) of the outside cylinder (8) in the form of a flat web have the shape of paddles or blades (10) protruding radially beyond the periphery of the outside cylinder (8) into the feed tray (4).

9. The device according to one of the preceding claims, **characterized in that** the feed tray (14) has a feed plate which has connecting elements (41, 42) for connection to the tray dome (6) in the area of the edge (40) of the plate.

10. The device according to Claim 9, **characterized in that** the connecting elements (41, 42) include a hinge joint (43) and at least one locking and/or holding element (44) .

11. The device according to one of Claims 9 and 10, **characterized in that** a toroidal surface of the feed plate which runs around the centre of the plate which is beneath the drop tube (3) is subdivided into feeding sections.

12. The device according to Claim 11, **characterized in that** each feeding section consists of at least one pocket, field or the like formed by an indentation (45) bordered by a recess and/or an elevation (21, 21') .

13. The device according to one of Claims 11 and 12, **characterized in that** the number of feeding sections is equal to a multiple of the number of bridge elements (9) of the outside cylinder (8) designed as paddles and/or blades (10).

## Revendications

1. Dispositif pour alimenter des volailles en liberté dans un poulailler, notamment des volailles engraissées, de préférence des poulets à rôtir, avec au moins un tube de transport du fourrage (1) tenu de façon relevable et abaissable au dessus du sol du poulailler, qui est muni d'une rangée d'orifices de dérivation, dont chacun est associé à un dispositif d'écuelles (2) accroché au tube de transport, présentant un tuyau de descente (3) partant de l'orifice de dérivation et une écuelle à fourrage située sous le tuyau de descente, dont la coupole d'écuelle est formée de barreaux de grille s'étendant en croisillons, le tuyau de descente étant constitué d'un cylindre intérieur (7) partant de l'orifice de dérivation et d'un cylindre extérieur (8) entourant le cylindre intérieur sur lequel l'écuelle est accrochée par l'intermédiaire des barreaux de grille de sa coupole d'écuelle (6) de façon telle que, lorsque le tube de transport du fourrage est abaissé, elle se pose, notamment sur le sol (34) du poulailler, le cylindre extérieur étant guidé de façon rotative ainsi que de façon relevable et abaissable sur le cylindre intérieur et au moins une butée de course limitant la course de levée et la course d'abaissement étant prévue,
dans lequel la surface extérieure (20) d'une section cylindrique supérieure (8') du cylindre extérieur (8) a la forme d'une broche filetée, les extrémités libres des barreaux de grille (5) de la coupole de l'écuelle (6) sont raccordées sur un anneau fileté (17) qui est vissé sur la région du cylindre extérieur (8) ayant la forme d'une broche filetée (15), le cylindre extérieur (8) présente dans sa zone ayant la forme d'une broche filetée (15) au moins une came d'enclenchement déformable en direction radiale (27), l'anneau fileté (17) de la coupole d'écuelle (6) est muni sur sa surface périphérique interne (36) d'évidements (37) dans lesquels les cames d'enclenchement (27) peuvent s'enclencher par complémentarité de forme, une surface prédéfinie de la surface extérieure (20) du cylindre intérieur (7) est sa partie de tête supérieure qui est décalée par rapport au reste du cylindre intérieur (7) grâce à un diamètre de cylindre réduit, il présente au moins une butée de rotation limitant la course de rotation du cylindre extérieur (8) par rapport au cylindre intérieur (7) et chaque butée de rotation présente au moins une élévation (21, 21') disposée dans une région prédéfinie de la surface externe (7) du cylindre intérieur (7) ainsi qu'au moins un entraîneur (19) situé sur la surface interne (18) du cylindre extérieur (8) dans la course de rotation effectuée lors de la rotation du cylindre extérieur (8) autour du cylindre intérieur (7) duquel l'élévation (21, 21') saillit.

2. Dispositif selon la revendication 1, **caractérisé en ce que** la came d'enclenchement (27) et les évidements (27) sont munis de flancs d'accostage (38, 39) orientés en oblique par rapport au mouvement de rotation.

3. Dispositif selon l'une quelconque des revendications 1 à 2, **caractérisé en ce que** le cylindre extérieur (8) et le cylindre intérieur (7) sont composés chacun de tronçons de cylindre voisins et coaxiaux les uns par rapport aux autres (8', 8'', 7' , 7") , des zones de bordure frontale qui se font face des tronçons de cylindre (8', 8", 7', 7") étant reliées entre elles par l'intermédiaire d'organes de pontage (9) qui enjambent une région de fente (11, 22) qui correspond à la distance entre les tronçons de cylindre (8', 8'', 7', 7'').

4. Dispositif selon la revendication 3, **caractérisé en ce que** le cylindre intérieur (7) est conçu de façon telle que son tronçon d'extrémité (7'') recouvre la région de fente (11, 22) entre les tronçons (8', 8") du cylindre extérieur (8) lorsque le cylindre extérieur (8) est déplacé par un soulèvement du tube de transport du fourrage (1) dans une position abaissée par rapport au cylindre intérieur (7), dans laquelle les butées de course (14) du cylindre intérieur (7) et du cylindre extérieur (8) se trouvent en butée mutuelle.

5. Dispositif selon l'une quelconque des revendications 3 et 4, **caractérisé en ce que** la butée de course (14) est composée d'un renfoncement (13) de la surface interne (12) du cylindre extérieur (8) et d'au moins un épaulement d'appui (24) pour le renfoncement (13) qui saillit de façon radiale à partir du cylindre intérieur (7).

6. Dispositif selon la revendication 5, **caractérisé en ce que** chaque épaulement d'appui (24) pour le renfoncement (13) est un élément d'une saillie radiale (25) analogue à une collerette du cylindre intérieur (7).

7. Dispositif selon l'une quelconque des revendications 3 à 6, **caractérisé en ce que** chaque organe de pontage (9) est une barrette plate, dont le plan superficiel de barrette est orienté de façon radiale par rapport à l'axe du cylindre intérieur (7) ou du cylindre extérieur (8) respectif.

8. Dispositif selon la revendication 7, **caractérisé en ce que** les organes de pontage (9) présents en tant que barrettes plates du cylindre extérieur (8) présentent la forme de palettes ou d'ailettes (10) saillant dans l'écuelle à fourrage (4) par dessus la périphérie du cylindre extérieur (8).

9. Dispositif selon l'une quelconque des revendications précédentes, **caractérisé en ce que** l'écuelle à fourrage (4) est munie d'une assiette à fourrage qui, dans sa région de bordure (40), est munie d'organes de liaison (41, 42) pour la liaison avec la coupole d'écuelle (6).

10. Dispositif selon la revendication 9, **caractérisé en ce que** les organes de liaison (41, 42) sont munis d'une articulation rabattable (43) et d'au moins un élément de verrouillage ou de maintien (44).

11. Dispositif selon l'une quelconque des revendications 9 et 10, **caractérisé en ce qu'**une surface annulaire de l'assiette à fourrage qui s'étend sous le centre de l'assiette situé sous le tuyau de descente (3) est divisée en sections d'alimentation.

12. Dispositif selon la revendication 11, **caractérisé en ce que** chaque section d'alimentation est constituée d'au moins une poche, d'un champ ou similaire constitué d'un moulage (45) délimité par un renfoncement ou une élévation (21, 21')

13. Dispositif selon l'une quelconque des revendications 11 et 12, **caractérisé en ce que** le nombre des sections d'alimentation est égal à un multiple des organes de pontage (9) du cylindre extérieur (8) qui sont conçus en tant que palettes ou qu'ailettes (10).
